# FASCICULE DE BREVET EUROPEEN

(11) **EP 2 279 586 B1**
(45) Date de publication et mention de la délivrance du brevet: **14.03.2012**
(21) Numéro de dépôt: 09766031.0
(22) Date de dépôt: 12.05.2009
(51) Int. Cl.: H04L 12/18, H04L 12/56

(54) **TECHNIQUE DE PROTECTION DANS UN RESEAU DE COMMUNICATION EN MODE CONNECTE D'UN ARBRE PRIMAIRE POINT A MULTIPOINT**
SCHUTZVERFAHREN IN EINEM KOMMUNIKATIONSNETZWERK IM VERBINDUNGSMODUS EINER PUNKT-ZU-MEHRPUNKT-PRIMÄRHIERARCHIE
TECHNIQUE FOR PROTECTION IN A COMMUNICATION NETWORK IN CONNECTED MODE OF A POINT-TO-MULTIPOINT PRIMARY TREE

(30) Priorité: 23.05.2008 FR 0853374
(43) Date de publication de la demande: 02.02.2011
(73) Titulaire: France Telecom, 75015 Paris (FR)
(72) Inventeur: LE ROUX, Jean-Louis, F-22300 Lannion (FR); CHAITOU, Mohamad, F-75018 Paris (FR)
(74) Mandataire: Lecomte, Isabelle
(86) Numéro de dépôt international: PCT/FR2009/050862
(87) Numéro de publication internationale: WO 2009/153469

(56) Documents cités:
- US-A1- 2007 019 646
- US-A1- 2007 047 556
- US-A1- 2007 177 525
- US-A1- 2007 268 899
- WEI C ET AL: "Head Node Protection Extensions to RSVP-TE for LSP Tunnels; draft-cao-mpls-te-p2mp-head-protection-01. txt" INTERNET DRAFT, IETF, 17 novembre 2007 (2007-11-17), XP015052690 cité dans la demande
- LE ROUX J L ET AL: "P2MP MPLS-TE Fast Reroute with P2MP Bypass Tunnels; draft-ietf-mpls-p2mp-te-bypass-02.txt" INTERNET DRAFT, IETF, 1 mars 2008 (2008-03-01), XP015053624 cité dans la demande
- KATZ D ET AL: "Bidirectional Forwarding Detection; draft-ietf-bfd-base-08.txt" IETF STANDARD-WORKING-DRAFT, INTERNET ENGINEERING TASK FORCE, IETF, CH, 1 mars 2008 (2008-03-01), XP015053110 cité dans la demande

## Description

L'invention concerne une technique de protection dans un réseau de communication en mode connecté d'un arbre primaire point à multipoint établi d'un noeud racine primaire vers des noeuds feuilles, en cas de panne affectant le noeud racine primaire.

Cette invention se situe dans le domaine des réseaux de communication et plus particulièrement les réseaux de transport de paquets en mode connecté.

Le transport de services tels qu'un service de télévision sur IP, noté IPTV pour "Internet Protocol Television", nécessite des mécanismes d'ingénierie de trafic permettant d'optimiser l'utilisation des ressources, de garantir une qualité de service adaptée au service et de minimiser les temps d'interruption de service en cas de panne. La technologie point-to-multipoint "Multi-Protocol Label Switching Trafic Engineering", notée P2MP MPLS-TE, est prévue à cet effet. Elle permet d'établir un arbre point à multipoint dans un réseau de communication multi-protocoles à commutation d'étiquettes MPLS avec réservation de ressources. Le protocole associé, tel que spécifié dans le document RFC 4875 issu du groupe IETF, pour "Internet Engineering Task Force", consiste en une extension du protocole RSVP-TE, pour "Resource reSerVation Protocol" et permet l'établissement d'arbres MPLS appelés LSP P2MP dans lesquels les paquets sont acheminés de façon explicite. De tels arbres répliquent le trafic depuis un noeud, appelé noeud racine, vers un ensemble de noeuds, appelés noeuds feuilles, qui sont alors en charge d'acheminer le trafic vers des récepteurs. L'acheminement explicite de type P2MP RSVP-TE permet d'établir des arbres dont les coûts respectifs minimisent la consommation de bande passante ; il permet en outre de réserver des ressources et donc de garantir une qualité de service lors de l'acheminement des paquets.

Pour minimiser l'impact d'une panne sur un service et en particulier, pour un service de type IPTV, sur les images télévision, il est nécessaire de pouvoir effectuer un réacheminement des paquets en une durée inférieure à cinquante millisecondes. Le mécanisme P2MP MPLS-TE "Fast Reroute", noté également FRR, tel que spécifié dans le document de l'IETF "draft-ietf-mpls-p2mp-te-bypass-01", repose sur des arbres de secours locaux contournant l'élément protégé ; il permet ainsi de garantir le niveau de sécurisation précité en cas de panne de lien ou de noeud de transit d'un LSP P2MP.

En revanche, il ne permet pas un réacheminement rapide des paquets en cas de panne du noeud racine.

Par la suite, on appelle panne affectant le noeud racine une panne du noeud lui-même ou une panne d'un lien supportant une branche issue de celui-ci.

Un mécanisme a été proposé pour la protection du noeud racine dans le document de l'IETF intitulé "draft-cao-mpls-te-p2mp-head-protection-01.txt". La protection d'un LSP P2MP, appelé arbre primaire, dans le cas d'une panne affectant sa racine primaire, repose sur un arbre de secours établi depuis une racine de secours. Le trafic diffusé est transmis par une source de diffusion vers les deux racines, la racine primaire et la racine de secours. Cet arbre de secours a en tant que feuilles un ou des noeuds en aval de la racine primaire sur le LSP primaire. Plus précisément, ce ou ces noeuds, appelés "Merge Point" ou noeuds de raccordement, appartiennent à l'arbre primaire et sont positionnés immédiatement en aval de la racine primaire sur les différentes branches de l'arbre primaire issues de la racine. Ainsi, une fois l'arbre de secours établi, il est possible de réinjecter le trafic en provenance de l'arbre de secours dans les branches de l'arbre primaire situées en aval des noeuds de raccordement. En mode nominal, seul l'arbre primaire est actif, c'est-à-dire que la racine primaire est la seule à injecter du trafic dans le réseau : l'arbre de secours est établi mais inactif, c'est-à-dire que la racine de secours détruit le trafic diffusé reçu de la source de diffusion. Lorsque la racine de secours détecte une panne affectant la racine primaire, elle active alors l'arbre de secours et achemine le trafic diffusé dans l'arbre de secours. Ainsi, aussi bien dans le cas du régime nominal que pendant la durée de la panne, le trafic parvient aux noeuds feuilles en un seul exemplaire.

Toutefois, ce mécanisme de protection, en cas de panne affectant la racine repose, sur une détection de la panne de la racine primaire par la racine de secours. Or, la racine de secours peut être éloignée de la racine primaire et il est alors très difficile d'assurer une détection de la panne en moins de cinquante millisecondes. Ceci est également le cas lorsqu'on utilise un protocole de détection de panne tel que le protocole BFD, pour "Bidirectional Forwarding Detection", tel que spécifié dans le document de l'IETF intitulé "draft-ietf-bfd-base-07.txt".

De plus, il est très difficile de synchroniser les deux racines. Lorsque les racines primaire et de secours sont éloignées l'une de l'autre, il est possible que la racine de secours diagnostique par erreur une panne de la racine primaire, par exemple lorsqu'il s'agit d'un problème sur un lien entre les deux racines. Dans ce cas, la racine de secours active l'arbre de secours alors que l'arbre primaire est toujours actif. Les récepteurs vont recevoir un trafic dupliqué en provenance des deux racines, ce qui équivaut dans le cas du service IPTV à une panne : à titre d'exemple, dans le cas d'un service de télévision conforme à une norme MPEG, pour " Moving Picture Experts Group", une duplication entraine une perte d'image. On perd ainsi en partie l'avantage lié au réacheminement rapide du trafic.

Il existe donc un besoin d'une technique permettant de garantir un réacheminement du trafic dans une durée compatible avec des services nécessitant une garantie de qualité de service sans duplication du trafic, en cas de panne du noeud racine d'un arbre à commutation d'étiquettes point à multipoint.

L'invention répond à ce besoin en proposant un procédé de protection dans un réseau de communication en mode connecté d'un arbre primaire point à multipoint établi d'un noeud racine primaire vers des noeuds feuilles, en cas de panne affectant le noeud racine primaire, par un arbre de secours entre un noeud racine de secours et au moins un noeud de raccordement, ledit au moins un noeud de raccordement appartenant à une branche de l'arbre primaire issue du noeud racine primaire, ledit procédé comprenant les étapes suivantes, mises en oeuvre par ledit au moins un noeud de raccordement :
- une étape de réception d'une demande d'établissement de l'arbre de secours envoyée par le noeud racine de secours,
- une étape de configuration d'une règle d'acheminement dans une table, ladite règle visant à acheminer des paquets en provenance de l'arbre de secours vers des branches de l'arbre primaire issues dudit noeud de raccordement,
caractérisé en ce que la demande d'établissement comprend un identifiant du noeud racine primaire protégé et en ce que ladite règle d'acheminement est prévue pour être activée uniquement en cas de panne affectant le noeud racine primaire identifié.

Ainsi, le noeud de raccordement considéré est configuré pour utiliser la règle d'acheminement configurée dans la table d'acheminement lors de la détection d'une panne affectant le noeud racine primaire. L'arbre de secours peut être un arbre point à multipoint ou un chemin point à point, en fonction de la structure de l'arbre primaire point à multipoint. En mode nominal, le noeud de raccordement reçoit des paquets en provenance des deux arbres, primaire et de secours. La règle d'acheminement de secours n'étant pas active, seuls les paquets en provenance de l'arbre primaire sont acheminés par le noeud de raccordement. Par configuration, l'arbre de secours se raccordant sur l'arbre primaire au niveau des noeuds de raccordement, il est possible d'injecter des paquets reçus en provenance du noeud racine de secours sur l'arbre de secours dans l'arbre primaire, une fois la règle d'acheminement de secours activée.

La demande d'établissement de l'arbre de secours reçue comprenant un identifiant du noeud racine primaire, le noeud de raccordement peut activer une surveillance du noeud racine primaire ou d'un lien supportant une branche de l'arbre primaire reliant le noeud racine primaire au noeud de raccordement. De par sa position sur l'arbre primaire, il est à même de détecter une panne affectant le noeud racine primaire dans un délai inférieur à cinquante millisecondes et permet d'obtenir le niveau de sécurisation recherché.

En outre, dans un mode de réalisation, la demande d'établissement comprend un identifiant de l'arbre primaire protégé différent de d'un identifiant de l'arbre de secours.

La demande d'établissement de l'arbre de secours reçue comprenant un identifiant de l'arbre primaire, il est ainsi plus aisé pour un opérateur de distinguer une panne intervenant sur un lien ou un noeud de l'arbre de secours d'une panne intervenant sur un lien ou un noeud de l'arbre primaire. L'identifiant de l'arbre primaire transmis est utilisé dans l'étape de configuration de la règle d'acheminement, afin de raccorder l'arbre de secours sur l'arbre primaire.

De plus, le procédé de protection comprend en outre une étape d'envoi au noeud racine primaire d'une notification indiquant qu'une protection de l'arbre primaire en cas de panne affectant le noeud racine est configurée.

Ainsi, le noeud racine primaire est informé de l'activation d'une protection en cas de panne l'affectant, cette protection étant mise en oeuvre par le noeud de raccordement ayant transmis la notification.

De plus, le procédé comprend une étape de détection d'une panne affectant le noeud racine primaire et une étape d'activation de ladite règle d'acheminement.

Lorsque la panne affectant la racine primaire est détectée par le noeud de raccordement, ce dernier peut alors activer la règle d'acheminement configurée et injecter ainsi les paquets en provenance de la racine de secours vers la ou les branches de l'arbre primaire en aval.

Dans un premier mode de réalisation, la protection est activée aussi bien en cas de panne du noeud racine primaire qu'en cas de panne affectant le lien entre le noeud racine primaire et le noeud de raccordement.

Dans un deuxième mode de réalisation, la protection est activée uniquement dans le cas d'une panne du noeud racine primaire. Ainsi, en cas de panne affectant le lien entre le noeud racine primaire et le noeud de raccordement, le noeud racine primaire peut activer un mécanisme de type "Fast ReRoute". Les mécanismes de protection, de type "Fast ReRoute" et selon l'invention, peuvent ainsi cohabiter et améliorer la protection finale.

Dans un mode de réalisation, le procédé de protection comprend en outre une étape de notification au noeud racine de secours de l'activation de la protection.

Ainsi le noeud racine de secours est informé de la mise en oeuvre de la protection par le noeud de raccordement et peut, en cas de panne affectant le lien entre le noeud racine primaire et le noeud de raccordement, en informer le noeud racine primaire.

Le procédé de protection comprend en outre une étape de maintien de l'arbre primaire établi pour chaque branche de l'arbre primaire issue du noeud de raccordement.

En raison de la panne, il n'y a plus d'échanges de messages de maintien de l'arbre primaire établi, en amont du noeud de raccordement. Afin de bénéficier des effets de la protection, il est nécessaire de continuer à transmettre des messages de maintien de l'arbre primaire sur la ou les branches de l'arbre primaire en aval du noeud de raccordement comme lors du fonctionnement en mode nominal.

Le procédé de protection comprend en outre :
- une étape de réception en provenance du noeud racine primaire d'une demande de rétablissement relative à l'arbre primaire ;
- une étape d'activation d'une autre règle d'acheminement, ladite autre règle visant à acheminer des paquets reçus sur l'arbre primaire vers les branches de l'arbre primaire issues dudit noeud de raccordement.

Lorsque la panne se termine, il est nécessaire que la branche de l'arbre primaire en amont du noeud de raccordement soit à nouveau établie à l'identique afin de revenir en mode nominal. Ceci permet également de rétablir la table d'acheminement dans sa configuration nominale avec protection configurée, c'est-à-dire avec la règle d'acheminement de secours configurée mais non active. Il est à noter que le retour au mode nominal n'entraîne pas d'interruption de service et ne nécessite pas de coordination entre le noeud racine primaire et le noeud racine de secours.

Dans un mode de réalisation, préalablement à l'étape de réception d'une demande de rétablissement de l'arbre primaire, le procédé comprend en outre :
- une étape de détection de la fin de panne ;
- une étape d'envoi au noeud racine primaire d'informations relatives à l'arbre primaire.

Ceci permet le cas échéant au noeud racine primaire d'obtenir les paramètres de l'arbre primaire afin de rétablir la branche de l'arbre primaire en amont du noeud de raccordement à l'identique.

L'invention concerne également un procédé de rétablissement dans un réseau de communication en mode connecté d'un arbre primaire point à multipoint établi d'un noeud racine primaire vers des noeuds feuilles, ledit procédé comprenant les étapes suivantes mises en oeuvre par ledit noeud racine primaire :
- une étape de réception en provenance d'un des noeuds de raccordement situés en aval d'une notification indiquant qu'une protection de l'arbre primaire est prévue, en cas de panne affectant le noeud racine primaire, par un arbre de secours se raccordant à l'arbre primaire audit noeud de raccordement ;
- une étape de détection d'une fin d'une panne l'affectant ;
- une étape d'envoi audit noeud de raccordement d'une demande de rétablissement relative à l'arbre primaire.

Le noeud racine primaire est informé par le ou les noeuds de raccordement de la configuration d'une protection. Lorsque la fin de la panne est détectée, il est préférable d'établir de nouveau à l'identique la ou les branches de l'arbre primaire le reliant au(x) noeud(s) de raccordement. Ainsi, l'arbre primaire est de nouveau établi et actif de la même manière qu'avant la panne.

Le noeud racine primaire peut avoir mémorisé les informations relatives à l'arbre primaire nécessaires au rétablissement.

Il peut également recevoir ces informations en provenance du noeud de raccordement lorsque celui-ci détecte la fin de la panne.

L'invention concerne également un noeud protecteur dans un réseau de communication en mode connecté, ledit noeud contribuant à protéger un arbre primaire point à multipoint établi d'un noeud racine primaire vers des noeuds feuilles, en cas de panne affectant le noeud racine primaire, par un arbre de secours entre un noeud racine de secours et au moins un noeud protecteur, ledit noeud protecteur appartenant à une branche de l'arbre primaire issue du noeud racine primaire et comprenant :
- des moyens de réception d'une demande d'établissement de l'arbre de secours envoyée par le noeud racine de secours comprenant un identifiant du noeud racine primaire protégé ;
- des moyens de configuration d'une règle d'acheminement dans une table, ladite règle visant à acheminer des paquets en provenance de l'arbre de secours vers des branches de l'arbre primaire issues dudit noeud protecteur uniquement en cas de panne affectant le noeud racine primaire.

L'invention concerne en outre un noeud racine dans un réseau de communication en mode connecté, ledit noeud étant la racine d'un arbre primaire point à multipoint établi vers des noeuds feuilles, apte à rétablir l'arbre primaire suite à la fin d'une panne l'affectant, ledit noeud comprenant :
- des moyens de réception en provenance d'un des noeuds de raccordement situés en aval d'une notification indiquant qu'une protection de l'arbre primaire est prévue en cas de panne affectant le noeud racine par un arbre de secours se raccordant à l'arbre primaire audit noeud de raccordement ;
- des moyens de détection d'une fin d'une panne l'affectant ;
- des moyens d'envoi audit noeud de raccordement d'une demande de rétablissement relative à l'arbre primaire.

L'invention concerne également un système de communication dans un réseau de communication en mode connecté comprenant :
- au moins un noeud racine, ledit noeud étant la racine d'un arbre primaire point à multipoint établi vers des noeuds feuilles ;
- au moins un noeud protecteur tel que décrit précédemment ;
- un noeud racine de secours comprenant des moyens d'envoi, agencés pour envoyer une demande d'établissement de l'arbre de secours à un noeud protecteur, la demande d'établissement comprenant un identifiant du noeud racine primaire protégé, et des moyens de réception, agencés pour recevoir d'un noeud protecteur une notification comprenant une information relative à la configuration de la protection par cet autre noeud.

L'invention concerne en outre un signal émis par un noeud d'un réseau de communication en mode connecté à destination d'un autre noeud du réseau et véhiculant une demande d'établissement d'une branche entre ledit noeud et ledit autre noeud, ladite branche appartenant à un arbre de secours, ladite demande d'établissement comprenant :
- une demande de protection d'un arbre primaire point à multipoint, établi d'un noeud racine primaire vers des noeuds feuilles, en cas de panne affectant le noeud racine primaire, par ledit arbre de secours, ledit autre noeud appartenant à une branche de l'arbre primaire issue du noeud racine primaire ;
- un identifiant du noeud racine primaire.

L'invention concerne également un signal émis par un noeud d'un réseau de communication en mode connecté à destination d'un autre noeud du réseau et véhiculant un message appartenant au groupe comprenant au moins une réponse à une demande d'établissement d'un arbre de secours entre ledit noeud et ledit autre noeud afin de protéger un arbre primaire point à multipoint, établi d'un noeud racine primaire vers des noeuds feuilles, en cas de panne affectant le noeud racine primaire, par ledit arbre de secours, et un message de maintien de l'arbre primaire établi, ledit noeud appartenant à une branche de l'arbre primaire issue du noeud racine primaire,
ledit message comprenant une information appartenant au groupe comprenant une information relative à la configuration de la protection et une information relative à l'activation de la protection.

L'invention concerne en outre un programme d'ordinateur comportant des instructions pour la mise en oeuvre du procédé de protection tel que décrit précédemment par un noeud d'un réseau de communication en mode connecté, lorsque ce programme est exécuté par un processeur.

L'invention sera mieux comprise à l'aide de la description suivante d'un mode de réalisation particulier du procédé de l'invention, en référence aux dessins annexés sur lesquels :
- la figure 1 représente de façon schématique un réseau de communication où sont mis en oeuvre les procédés selon l'invention ;
- la figure 2 représente un dispositif selon un mode particulier de l'invention ;
- la figure 3 représente les étapes des procédés de protection et de rétablissement selon un mode particulier de réalisation de l'invention ;
- la figure 4a représente un message de demande d'établissement d'un arbre de secours selon un mode particulier de réalisation de l'invention ;
- la figure 4b représente un message de réponse à une demande d'établissement ou un message de maintien de l'arbre primaire établi selon un mode particulier de réalisation de l'invention.

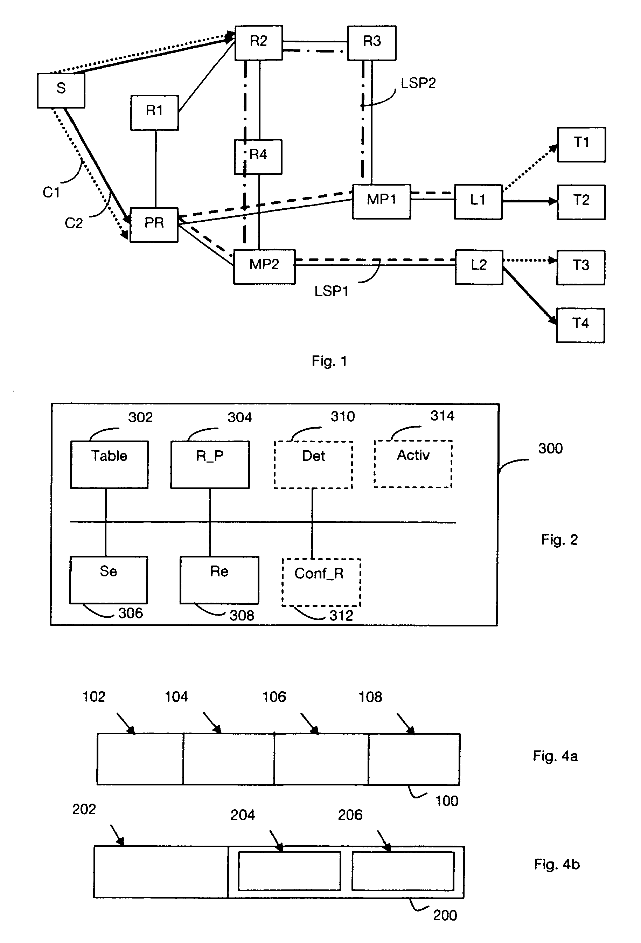

Sur la figure 1, on a représenté de façon schématique un réseau de communication. Ce réseau comprend une pluralité de noeuds d'acheminement, notés PR, R1 à R4, MP1 et MP2. Une source S de type Multicast émet le trafic de deux canaux Multicast, notés C1 et C2. Le réseau comprend également deux noeuds feuilles L1 et L2, auxquels sont connectés des récepteurs T1 à T4. Les récepteurs T1 et T2 sont connectés au noeud feuille L1 et reçoivent respectivement les canaux Multicast C1 et C2. Les récepteurs T3 et T4 sont connectés au noeud feuille L2 et reçoivent respectivement les canaux Multicast C1 et C2. Un premier arbre ou arbre primaire, noté LSP1, point à multipoint en mode connecté est établi entre le noeud PR et les noeuds feuilles L1 et L2 par les mécanismes définis dans le document de l'IETF RFC 4875. On appelle par la suite le noeud PR, noeud racine primaire de l'arbre primaire. Cet arbre primaire comprend deux branches issues du noeud racine primaire : une première qui le relie au noeud MP1 et une seconde qui le relie au noeud MP2. Puis, l'arbre primaire comprend une branche issue du noeud MP1 vers le noeud feuille L1 et une autre branche issue du noeud MP2 vers le noeud feuille L2. Les deux canaux C1 et C2 sont diffusés vers la racine primaire PR. Les paquets de ces deux canaux sont acheminés par l'arbre primaire LSP1 ainsi établi et parviennent aux deux noeuds feuilles L1 et L2. Les noeuds feuilles L1 et L2 comprennent des moyens leur permettant de distinguer si le trafic reçu de l'arbre primaire LSP1 appartient au canal C1 ou au canal C2. Ces moyens sont basés sur des extensions du protocole BGP, pour "Border Gateway Protocol", telles que définies dans les documents de l'IETF RFC 4364 et "Multicast in MPLS/BGP VPNs". Ils peuvent également être basés sur des mécanismes de type multicast IP.

Dans l'exemple particulier de la figure 1, un deuxième arbre ou arbre de secours, noté LSP2, point à multipoint en mode connecté est configuré entre le noeud R2 et les noeuds feuilles L1 et L2. On appelle par la suite le noeud R2, noeud racine de secours de l'arbre de secours. Cet arbre de secours comprend deux branches issues du noeud racine de secours : une première qui le relie au noeud MP1 par l'intermédiaire du noeud d'acheminement R3 et une seconde qui le relie au noeud MP2 par l'intermédiaire du noeud d'acheminement R4. Les noeuds d'acheminements MP1 et MP2 sont appelés par la suite noeuds de raccordement ou Merge Point ; ils permettent de raccorder l'arbre de secours sur l'arbre primaire. Ces noeuds de raccordement MP1 et MP2 sont des noeuds en aval sur les différentes branches issues du noeud racine primaire. De préférence, afin de permettre une détection rapide d'une panne affectant le noeud racine primaire PR, ils sont situés aux extrémités respectives des branches issues du noeud racine primaire PR. Les deux canaux C1 et C2 sont également diffusés vers la racine de secours R2. Le procédé d'établissement de l'arbre de secours est détaillé ultérieurement lors de la description des étapes du procédé de protection. On notera qu'en fonction de la structure de l'arbre primaire, l'arbre de secours peut également être un chemin point à point ; ceci se produit lorsqu'il n'y a qu'un seul noeud de raccordement. Par la suite, le terme arbre de secours couvre des arbres point à multipoint lorsqu'il existe plusieurs noeuds de raccordement et des chemins point à point dans le cas contraire. Il est bien entendu que le réseau comprend également d'autres noeuds d'acheminement, non représentés sur la figure 1. En effet, seuls les noeuds jouant un rôle lors de l'établissement des arborescences sont représentés. Par ailleurs, il convient de noter que les procédés tels que décrits ne se restreignent pas à la protection d'un arbre primaire tel que représenté sur la figure 1, d'arborescence très simple.

Sur la figure 4a, on a représenté un message 100 de demande d'établissement d'un arbre de secours. Par exemple, dans le protocole RSVP-TE, il s'agit d'un message "Path".

Un tel message 100 comprend un champ 102 comprenant un type de message et des paramètres 104 nécessaires à l'établissement de l'arbre de secours.

Selon l'invention, il comprend en outre :
- un identifiant 106 du noeud racine primaire, par exemple son adresse dans le réseau IP ;
- des paramètres 108 de l'arbre primaire, notamment un indicateur point à multipoint, un identifiant du tunnel, un identifiant d'arbre primaire.

Ainsi, la demande d'établissement de l'arbre de secours comprend une demande de protection d'un arbre primaire point à multipoint, établi d'un noeud racine primaire vers des noeuds feuilles, en cas de panne affectant le noeud racine primaire, par ledit arbre de secours.

Par exemple, dans le protocole RSVP-TE, l'identifiant 106 du noeud racine primaire et les paramètres 108 de l'arbre primaire peuvent être transportés dans un nouvel objet RSVP-TE appelé "Root_Protection".

Sur la figure 4b, on a représenté un message 200. Ce message peut être une réponse à la demande 100 d'établissement de l'arbre de secours, un message de notification ou un message de maintien de l'arbre primaire établi. Par exemple, dans le protocole RSVP-TE, il s'agit de messages "Path" ou "Resv".

Un tel message 200 comprend outre un champ 202 comprenant un type de message et en fonction de ce type de message, les objets spécifiés dans le document de l'IETF RFC 4875 :
- une information 204 relative à la configuration de la protection, protégé ou non ;
- une information 206 relative à l'activation de la protection, activée ou non.

A titre d'exemple, il est possible de prévoir deux nouveaux attributs dans l'objet RSVP-TE LSP_ATTRIBUTE, tel que spécifié dans le document de l'IETF "Encoding of Attributes for MPLS Label Switched Path (LSP) Establishment Using RSVP-TE", RFC 4420.

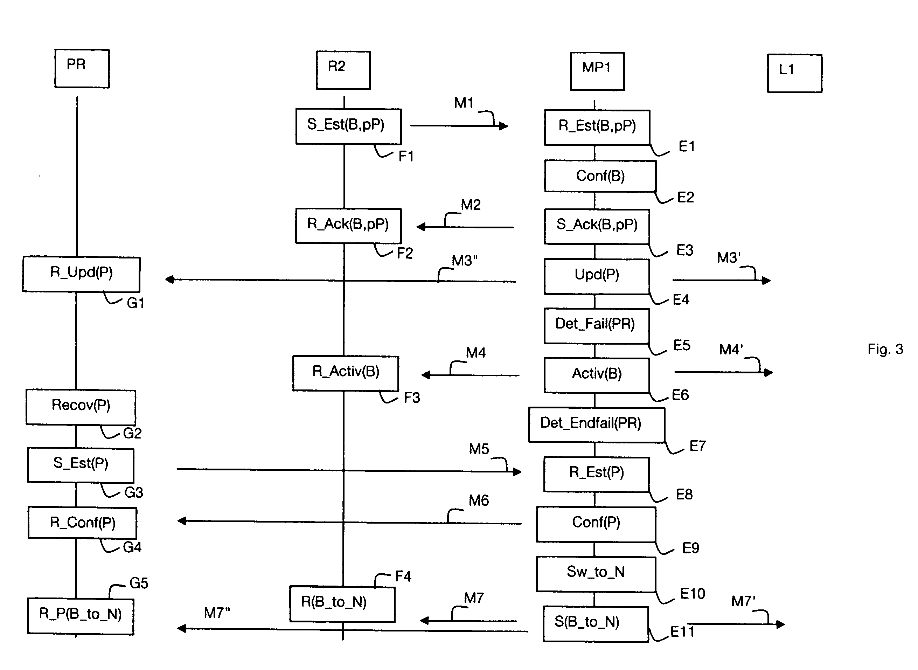

Le procédé de protection dans un réseau de communication en mode connecté d'un arbre primaire point à multipoint établi d'un noeud racine primaire vers des noeuds feuilles, en cas de panne affectant le noeud racine primaire, et le procédé de rétablissement vont maintenant être décrits en relation avec la figure 3.

On se place dans un état initial où l'arbre primaire point à multipoint, noté LSP1, est déjà établi entre le noeud racine primaire PR et des noeuds feuilles L1 et L2 par l'intermédiaire des noeuds de raccordement MP1 et MP2. Ainsi, chaque noeud de raccordement comprend dans une table 302 d'acheminement MPLS une règle d'acheminement, appelée par la suite règle d'acheminement nominale, visant à acheminer les paquets reçus en provenance d'une branche de l'arbre primaire vers la ou les branches de l'arbre primaire issues du noeud de raccordement considéré. Plus précisément, des paquets reçus en provenance d'une branche de l'arbre primaire en amont avec une étiquette affectée à cette branche de l'arbre primaire sont émis sur une ou plusieurs autres branches de l'arbre primaire en aval respectivement avec une étiquette affectée à cette autre branche. Dans le cas particulier de la figure 1 et en considérant le noeud de raccordement MP1, les paquets reçus du noeud racine primaire PR sur l'arbre primaire LSP1 sont acheminés vers la branche de l'arbre primaire reliant le noeud de raccordement MP1 au noeud feuille L1.

Dans un mode de réalisation particulier, l'arbre de secours est configuré par un opérateur sur le noeud racine de secours R2, en indiquant qu'il s'agit d'un arbre de secours visant à protéger un noeud racine.

L'opérateur configure également les paramètres suivants:
- l'adresse dans le réseau IP du noeud racine primaire PR à protéger ;
- des paramètres de l'arbre primaire, c'est-à-dire un indicateur point à multipoint, un identifiant de tunnel, un identifiant d'arbre primaire ;
- une liste des adresses dans le réseau IP des noeuds de raccordement MP
- les paramètres relatifs à la réservation de ressources de l'arbre primaire, bande passante, priorités, classe de service ;
- une liste de canaux multicast protégés ;
- le chemin explicite de l'arbre de secours.

Par la suite, on note LSP2 l'arbre de secours.

Dans une première étape F1 d'envoi d'une demande d'établissement, notée "S_Est(B,pP)" sur la figure 3, le noeud racine de secours R2 transmet, à destination de l'un des noeuds de raccordement MP, un message M1 de demande d'établissement 100 de l'arbre de secours LSP2 comprenant une demande de protection de l'arbre primaire point à multipoint LSP1, en cas de panne affectant le noeud racine primaire PR, un identifiant 106 du noeud racine primaire PR et un identifiant 108 de l'arbre primaire, tel que représenté à la figure 4a. Il s'agit par exemple d'un message RSVP-TE "Path". On note que la demande d'établissement de l'arbre de secours désactive la fonction PHP, pour "Penultimate Hop Popping", sur l'arbre de secours, afin de permettre au niveau du noeud de raccordement une identification des paquets reçus dans l'arbre de secours.

Dans ce mode de réalisation particulier, le message M1 de demande d'établissement de l'arbre de secours comprend, en plus de l'identifiant de l'arbre de secours, l'identifiant 108 de l'arbre primaire. Ceci permet d'avoir deux identifiants différents, distinguant l'arbre de secours de l'arbre primaire. Il est ainsi plus aisé pour un opérateur de distinguer une panne intervenant sur un lien ou un noeud de l'arbre de secours d'une panne intervenant sur un lien ou un noeud de l'arbre primaire.

On se place par la suite au niveau d'un des noeuds de raccordement, par exemple le noeud de raccordement MP1. Le noeud de raccordement joue le rôle de noeud protecteur. On notera que les messages échangés entre le noeud racine de secours R2 et le noeud de raccordement MP1 transitent par l'intermédiaire du noeud d'acheminement R3, qui n'est plus mentionné par la suite afin de simplifier la description.

Dans une étape E1 du procédé de protection, de réception d'une demande d'établissement, notée "R_Est(B,pP)", le noeud de raccordement MP1 reçoit le message M1.

Dans une étape E2 du procédé de protection, de configuration d'une règle d'acheminement, notée "Conf(B)" sur la figure 3, le noeud de raccordement MP1 établit l'arbre de secours LSP2 conformément à la demande d'établissement puis configure une autre règle d'acheminement, appelée par la suite règle d'acheminement de secours, dans la table d'acheminement MPLS. La règle d'acheminement de secours vise à acheminer des paquets en provenance d'une branche de l'arbre de secours LSP2, déterminé par l'identifiant de l'arbre de secours, vers la ou les branches de l'arbre primaire, déterminé par l'identifiant 108 de l'arbre primaire, issues du noeud de raccordement MP1. Dans le cas particulier de la figure 1, il s'agit d'acheminer les paquets reçus sur la branche de l'arbre de secours issue du noeud R3 vers la branche de l'arbre primaire LSP1 reliant le noeud de raccordement MP1 au noeud feuille L1. Cette règle d'acheminement de secours est configurée en tant que sortie de secours en cas de panne affectant le noeud racine primaire PR. Toutefois, la règle d'acheminement de secours n'est pas active, c'est-à-dire que les paquets reçus en provenance de l'arbre de secours sont ignorés par le noeud de raccordement.

Dans une étape E3 du procédé de protection, de réponse à la demande d'établissement, notée "S_Ack(B,pP)" sur la figure 3, le noeud de raccordement MP1 transmet à destination du noeud racine de secours R2 un message M2 de confirmation d'établissement de l'arbre de secours 200 comprenant une indication 204 que la protection demandée est configurée et une indication 206 que la protection n'est pas active, tels que représentés à la figure 4b. Il s'agit par exemple d'un message RSVP-TE "Resv".

Dans une étape F2 du procédé de protection de réception d'une réponse, notée "R_Ack(B,pP)" sur la figure 3, le noeud racine de secours R2 reçoit le message M2.

Ainsi, le noeud racine de secours R2 est non seulement informé de l'établissement effectif de la branche de l'arbre de secours le reliant au noeud de raccordement MP1 mais également que la configuration de la table d'acheminement a été réalisée.

A l'issue de l'étape E3, le noeud de raccordement MP1 transmet dans une étape E4 de notification du procédé de protection, notée "Upd(P)" sur la figure 3, un premier message M3' en aval, c'est-à-dire sur la ou les branches de l'arbre primaire issues du noeud de raccordement et un deuxième message M3" en amont, c'est-à-dire vers le noeud racine primaire. Ces messages M3' et M3", tels que représentés sur la figure 4b, sont relatifs à l'arbre primaire LSP1 et comprennent une indication 204 que la protection du noeud racine primaire est configurée et une indication 206 que la protection n'est pas active. Il s'agit par exemple, vers l'aval, d'un message RSVP-TE "Path" de rafraîchissement des états RSVP et vers l'amont, d'un message RSVP-TE "Resv" de mise à jour.

Dans une étape G 1 du procédé de rétablissement, de réception, notée "R_Upd(P)" sur la figure 3, le noeud racine primaire PR reçoit le message M3" en provenance du noeud de raccordement MP1 lui indiquant qu'une protection en cas de panne affectant le noeud racine primaire de l'arbre primaire est configurée.

L'étape G 1 peut également être mise en oeuvre dans le procédé de protection et permet à un opérateur du réseau de superviser plus facilement les protections configurées dans son réseau.

Ces différentes étapes E1 à E3, F1 et F2 du procédé de protection et G1 du procédé de rétablissement sont répétées pour les différents noeuds de raccordement le cas échéant.

Suite à cette ou à ces étapes G1 de réception, et ainsi à la réception d'un ou de plusieurs messages M3" en provenance du ou des noeuds de raccordement, le noeud racine primaire PR sauvegarde dans une zone mémoire non volatile les identifiants de l'arbre primaire, c'est-à-dire un indicateur point à multipoint, un identifiant du tunnel, un identifiant de l'arbre primaire et le chemin explicite de l'arbre primaire, afin de pouvoir rétablir l'arbre primaire à l'identique après sa propre panne.

Dans le plan de transfert des paquets, en mode nominal, les paquets reçus par les noeuds racines, primaire et de secours, en provenance de la source de diffusion sont respectivement acheminés sur les arbres primaire et de secours. Les noeuds de raccordement MP1 et MP2 reçoivent les paquets deux fois mais ne réacheminent pas les paquets reçus sur l'arbre de secours. Ainsi, les paquets émis par la source de diffusion parviennent aux noeuds feuilles en un seul exemplaire.

Ces différentes étapes sont relatives à une phase de configuration et de fonctionnement en mode nominal.

On décrit maintenant une deuxième phase, dite phase de basculement du mode nominal au mode de secours.

Dans une étape E5 du procédé de protection, de détection d'une panne, notée "Det_fail(PR)" sur la figure 3, le noeud de raccordement MP1 détecte une panne affectant le noeud racine primaire PR. Il peut s'agir d'une panne du noeud racine primaire en lui-même ou bien d'une panne du lien sur lequel est établi la branche de l'arbre primaire reliant le noeud racine primaire PR au noeud de raccordement MP1. Il détecte la panne du noeud racine primaire PR par une alarme de niveau 2 ou à l'aide du protocole BFD, pour "Bidirectional Forwarding Detection", tel que spécifié dans le document de l'IETF intitulé "draft-ietf-bfd-base-07.txt".

Dans une étape E6 du procédé de protection, d'activation de la règle d'acheminement de secours, notée "Activ(B)" sur la figure 3, le noeud de raccordement MP1 désactive la sortie nominale, c'est-à-dire la règle d'acheminement nominale, et active la sortie de secours, c'est-à-dire la règle d'acheminement de secours configurée à l'étape E2. Une panne affectant le noeud racine primaire PR est détectée rapidement par un noeud de raccordement MP1 car celui-ci est un voisin direct du noeud racine primaire. A titre d'exemple, pour une interface de type SDH, pour "Synchronous Digital Hierarchy", cette détection a lieu en moins de cinq millisecondes.

Dans le plan de transfert, en mode de secours, les paquets reçus par le noeud de raccordement MP1 sur l'arbre de secours sont acheminés sur la ou les branches de l'arbre primaire issues du noeud de raccordement. La continuité de l'arbre primaire LSP1 est ainsi assurée. Les paquets reçus par le noeud de raccordement MP1 sur l'arbre primaire, le cas échéant, sont ignorés. Ainsi, les paquets émis par la source de diffusion parviennent aux noeuds feuilles en un seul exemplaire. La durée nécessaire au réacheminement des paquets s'effectue en un temps compatible avec le niveau de sécurisation requis.

Puis, toujours dans cette étape E6 d'activation de la règle d'acheminement de secours, le noeud de raccordement MP1 transmet des messages de notification M4 et M4' respectivement en amont, c'est-à-dire à destination du noeud racine de secours R2 et en aval, c'est-à-dire sur la ou les branches de l'arbre primaire issues du noeud de raccordement. Ces messages de notification M4 et M4', tels que représentés sur la figure 4b, comprennent une indication 206 que la protection de l'arbre primaire par l'arbre de secours est activée. Par exemple, il s'agit d'un message RSVP-TE "Resv" de mise à jour de l'arbre de secours LSP2 en amont et un message RSVP-TE "Path" de mise à jour de l'arbre primaire LSP1 en aval. De plus, le message M4' est transmis régulièrement afin de maintenir l'arbre primaire établi en aval. Cela permet d'éviter que les états RSVP de l'arbre primaire LSP1 en aval expirent, ce qui entraînerait la suppression de l'arbre primaire LSP1.

Le message M4 est reçu par le noeud racine de secours R2 dans une étape F3 du procédé de protection, de réception, notée "R_Activ(B)" sur la figure 3.

Dans une troisième phase, dite phase de retour au mode nominal, les noeuds mettent en oeuvre les étapes suivantes.

Dans une étape G2 du procédé de rétablissement, de récupération de paramètres, notée "Recov(P)" sur la figure 3, le noeud racine primaire PR détecte une fin d'une panne l'ayant affecté. S'il s'agit de sa propre panne, il récupère les paramètres de l'arbre primaire LSP1 qu'il a sauvegardés dans une zone mémoire non volatile. Ce sont les paramètres de l'arbre primaire LSP1 nécessaires au rétablissement de celui-ci sur sa partie en amont des noeuds de raccordement.

Il envoie ensuite dans une étape G3 du procédé de rétablissement, d'envoi de message, notée "S_Est(P)" des messages M5 de demande d'établissement de l'arbre primaire LSP1 aux noeuds de raccordement. Par exemple, il s'agit de messages RSVP-TE "Path". Ces messages M5 permettent de rétablir les branches de l'arbre primaire en amont des noeuds de raccordement à l'identique.

Dans une étape E7 du procédé de protection, de détection de fin de panne,, notée "Det_Endfail(PR)" sur la figure 3, le noeud de raccordement MP1 a détecté la fin de la panne.

Il reçoit dans une étape E8 du procédé de protection, de réception, notée "R_Est(P)" sur la figure 3, le message M5.

Dans une étape E9 du procédé de protection, de configuration, notée "Conf(P)" sur la figure 3, il configure alors dans sa table d'acheminement MPLS la règle d'acheminement nominale mais ne l'active pas, puis envoie un message M6 de confirmation d'établissement. Par exemple, il s'agit de messages RSVP-TE "Resv". Le noeud de raccordement MP1 déclenche ensuite une temporisation d'attente T.

Dans une étape G4 du procédé de rétablissement, de réception de message, notée "R_Conf(P)" sur la figure 3, le noeud racine primaire PR reçoit le message M6 de confirmation d'établissement de l'arbre primaire. Le noeud racine primaire PR transmet alors les paquets reçus de la source de diffusion sur l'arbre primaire.

A l'expiration de la temporisation d'attente T, dans une étape E10 du procédé de protection, de retour au mode nominal, notée "Sw_to_N" sur la figure 3, le noeud de raccordement MP1 désactive dans sa table d'acheminement la règle d'acheminement de secours et active la règle d'acheminement nominale. La règle d'acheminement de secours est configurée de nouveau en tant que sortie de secours en cas de panne affectant le noeud racine primaire PR. Puis dans une étape E11 du procédé de protection, de notification, notée "S(B_to_N)" sur la figure 3, le noeud de raccordement MP1 transmet :
- un message M7" de mise à jour de l'arbre primaire, indiquant que la protection du noeud racine primaire est configurée mais non activée, vers le noeud racine primaire PR ; par exemple, il s'agit d'un message RSVP-TE "Resv",
- un message M7 de mise à jour de l'arbre de secours, indiquant que la protection du noeud racine primaire est configurée mais non activée, vers le noeud racine de secours R2 ; par exemple, il s'agit d'un message RSVP-TE "Resv",
- un message M7' de mise à jour de l'arbre primaire, indiquant que la protection du noeud racine primaire est configurée mais non activée, vers la ou les branches de l'arbre primaire en aval ; par exemple, il s'agit d'un message RSVP-TE "Path".

Le message M7 est reçu par le noeud racine de secours R2 dans une étape F4 du procédé de protection, de réception, notée "R(B_to_N)" sur la figure 3.

Le message M7 est reçu par le noeud racine primaire PR dans une étape G5 du procédé de rétablissement, de réception, notée "R_P(B_to_N)" sur la figure 3.

Le mode de fonctionnement est ainsi revenu au mode nominal ainsi qu'il a été établi à l'issue de la première phase, l'arbre primaire étant protégé par l'arbre de secours en cas de panne affectant le noeud racine primaire. Ainsi, il est possible de revenir à ce mode de fonctionnement nominal sans impact sur la réception des paquets par les récepteurs. Le procédé de rétablissement de l'arbre primaire n'impose pas d'échanges de messages entre le noeud racine primaire et le noeud racine de secours et évite les problèmes de synchronisation éventuels entre les deux noeuds racines.

Dans le plan de transfert, avant l'expiration de la temporisation d'attente T, les paquets reçus par le noeud de raccordement MP1 sur l'arbre de secours sont acheminés sur la ou les branches de l'arbre primaire issues du noeud de raccordement. Les paquets reçus par le noeud de raccordement MP1 sur l'arbre primaire, le cas échéant, sont ignorés. Après l'expiration de la temporisation d'attente T, les paquets reçus par le noeud de raccordement MP1 sur l'arbre de secours sont ignorés. Les paquets reçus par le noeud de raccordement MP1 sur l'arbre primaire sont acheminés sur la ou les branches de l'arbre primaire issues du noeud de raccordement. Ainsi, pendant cette troisième phase de retour au mode nominal, les paquets émis par la source de diffusion parviennent aux noeuds feuilles en un seul exemplaire.

En tant qu'alternative à l'implémentation de la temporisation d'attente T, il est également possible de prévoir une notification émise du noeud racine primaire à destination du ou des noeuds de raccordement, indiquant à ces derniers que le transfert de paquets à partir du noeud racine primaire sur l'arbre primaire a repris.

La description de ce mode de réalisation a été réalisée en insérant dans la demande d'établissement de l'arbre de secours, un identifiant 108 de l'arbre primaire ; ceci permet d'utiliser une valeur différente pour l'identifiant de l'arbre de secours. Dans une variante à ce mode de réalisation, la demande d'établissement de l'arbre de secours M1 ne comprend pas explicitement un identifiant 108 de l'arbre primaire. Dans ce cas, l'identifiant de l'arbre primaire à protéger est indiqué implicitement par l'identifiant de l'arbre de secours. Ainsi, le même identifiant est utilisé pour l'arbre de secours et pour l'arbre primaire.

Dans un autre mode de réalisation, à l'issue de la phase de configuration, la sauvegarde des paramètres de l'arbre primaire n'est pas effectuée par le noeud racine primaire PR. Dans ce cas, suite à la détection de la fin de la panne à l'étape F7, le noeud de raccordement MP1 transmet au noeud racine primaire PR dans un message de notification l'ensemble des paramètres de l'arbre primaire, tels que transmis par le noeud racine primaire PR lors de l'établissement de l'arbre primaire. A titre d'exemple, il s'agit d'un message RSVP-TE "Recovery Path", tel que défini dans le document de l'IETF "Extensions to GMPLS Resource Reservation Protocol (RSVP) Graceful Restart", RFC5063. Ce message est reçu par le noeud racine primaire PR au cours de l'étape G2 de récupération. Les autres étapes des procédés sont inchangées.

Dans une première variante à ces deux modes de réalisation, l'opérateur ne configure pas le chemin explicite de l'arbre de secours vers les noeuds de raccordement. Dans ce cas, le noeud racine de secours R2 doit le déterminer préalablement à l'étape F1. Le chemin de secours vers un noeud de raccordement MP donné doit éviter le noeud racine primaire PR et l'ensemble des liens appartenant à au moins un groupe de liens à risques partagés, ou SRLG pour "Shared Risk Link Group", du lien entre le noeud racine primaire PR et le noeud de raccordement donné.

Dans une deuxième variante à ces deux modes de réalisation, l'opérateur ne configure pas l'arbre de secours. Dans ce cas, le noeud racine primaire PR effectue les opérations suivantes :
- il détermine les canaux multicast à protéger. Il peut s'agir d'une liste de canaux configurée, ou par défaut de l'ensemble des canaux transportés ;
- il détermine un noeud racine de secours R2. Cette détermination peut être réalisée de façon statique, par configuration sur le noeud racine primaire PR, ou de façon dynamique par analyse des informations BGP d'annonce des canaux multicasts. Un noeud peut être éligible, en tant que noeud racine de secours, si les canaux multicasts qu'il annonce incluent les canaux à protéger. Lorsque plusieurs noeuds sont éligibles en tant que noeud racine de secours, le noeud racine primaire PR en détermine un par une politique locale, par exemple le plus proche ;
- Une fois le noeud racine de secours déterminé, le noeud racine primaire peut optionnellement calculer un arbre point à multipoint de secours du noeud racine de secours vers l'ensemble des noeuds de raccordement MP. Un chemin d'un arbre de secours entre le noeud racine de secours et un noeud de raccordement MP donné doit éviter le noeud racine primaire PR mais également l'ensemble des liens appartenant à au moins un groupe de liens à risques partagés, ou SRLG pour "Shared Risk Link Group", du lien entre le noeud racine primaire PR et le noeud de raccordement donné. L'arbre de secours peut également être configuré de façon statique sur le noeud racine primaire PR. Il peut également être déterminé par le noeud racine de secours. Le calcul coordonné des arbres primaires et de secours par le noeud racine primaire PR permet d'offrir une meilleure optimisation des ressources.
- le noeud racine primaire envoie un message de notification, par exemple un message Notify vers le noeud racine de secours R2 avec les paramètres suivants : l'adresse du noeud racine primaire PR, un identifiant de l'arbre primaire, une liste de noeuds de raccordement MP, des paramètres relatifs à la réservation de ressources TE, une liste des canaux à protéger, et, optionnellement, le chemin explicite de secours P2MP indiquant au noeud racine de secours qu'il doit activer un arbre de secours.

Dans cette deuxième variante, à l'issue de l'étape F2 de réception d'une réponse et une fois qu'il a reçu des réponses de l'ensemble des noeuds de raccordement, le noeud racine de secours R2 transmet au noeud racine primaire une confirmation de l'activation de l'arbre de secours et de la protection.

On note que dans les différents modes de réalisation décrits ainsi que leurs variantes, le noeud racine de secours R2 transmet dans le plan de transfert la totalité des paquets reçus en provenance de la source de diffusion S et n'a aucun rôle à jouer dans l'activation de la protection. Le ou les noeuds de raccordement sont, quant à eux, actifs dans l'activation de la protection. Ces rôles ainsi définis sont donc différents de ceux précisés dans le document "draft-cao-mpls-te-p2mp-head-protection-01.txt" de l'état de la technique et contribuent à répondre au besoin défini.

Il est possible de combiner une protection Fast Reroute du lien entre le noeud racine primaire PR et le noeud de raccordement MP1, tel que spécifié dans le document de l'IETF "P2MP Fast Reroute", "draft-ietf-mpls-p2mp-te-bypass-01", et le procédé de protection tel que défini précédemment. Cela nécessite sur le noeud de raccordement MP1 un mécanisme permettant de distinguer une panne de lien d'une panne de noeud, par exemple de la manière définie dans le document de l'IETF intitulé "Distinguish a link from a node failure using RSVP Hellos extensions", "draft-vasseur-mpls-linknode-failure". Ceci permet de basculer sur l'arbre de secours uniquement en cas de panne du noeud racine primaire PR lui-même et de conserver les avantages des mécanismes de type Fast Reroute en cas de panne d'un lien de l'arbre primaire issu du noeud racine primaire PR.

La figure 2 représente un noeud 300 d'un réseau de communication.

Le noeud comprend :
- une table d'acheminement 302, notée "Table" sur la figure 2, agencée pour mémoriser des règles d'acheminement, actives ou non ;
- des moyens 304 d'acheminement de paquets, notés "R_P" sur la figure 2, agencés pour acheminer des paquets en fonction de règles d'acheminement, mémorisées dans la table 302 d'acheminement ;
- un module 306 d'envoi dans le plan de commande de messages selon un protocole donné, noté "Se" sur la figure 2 ;
- un module 308 de réception dans le plan de commande de messages selon le protocole donné, noté "Re" sur la figure 2 ;
- un module 310 de détection de début et de fin de panne, noté "Det" sur la figure 2, agencé pour détecter une panne affectant un noeud donné.

Dans le mode particulier décrit, les modules 306 et 308 mettent en oeuvre le protocole RSVP-TE, conformément à la RFC 4875.

Un noeud du réseau de communication jouant le rôle de noeud protecteur en cas de panne affectant un noeud racine primaire d'un arbre primaire point à multipoint est remarquable en ce que :
- le module 308 de réception est agencé pour recevoir une demande d'établissement de l'arbre de secours envoyée par le noeud racine de secours comprenant un identifiant du noeud racine primaire protégé et un identifiant d'un arbre primaire protégé ;
- il comprend un module 312 de configuration d'une règle d'acheminement dans la table d'acheminement, noté "Conf_R" sur la figure 2, cette règle visant à acheminer des paquets en provenance de l'arbre de secours vers des branches de l'arbre primaire issues du noeud protecteur uniquement en cas de panne affectant le noeud racine primaire.

Il comprend également un module 314 d'activation de règle, noté "Activ" sur la figure 2, agencé pour activer une règle d'acheminement de secours et désactiver une règle d'acheminement nominale en fonction d'une panne détectée par le module 310 de détection de panne. Le module 314 est en outre agencé pour activer la règle d'acheminement nominale et désactiver la règle d'acheminement de secours, suite à une demande de rétablissement de l'arbre primaire.

Le module 306 d'envoi est en outre agencé pour transmettre à d'autres noeuds des notifications comprenant une information relative à la configuration de la protection et une information relative à l'activation de la protection.

Un noeud du réseau de communication jouant le rôle de noeud racine de secours en cas de panne affectant un noeud racine primaire d'un arbre primaire point à multipoint est remarquable en ce que :
- le module 306 d'envoi est agencé pour envoyer une demande d'établissement de l'arbre de secours à un autre noeud, la demande d'établissement comprenant un identifiant du noeud racine primaire protégé et un identifiant d'un arbre primaire protégé ;
- le module 308 de réception est en outre agencé pour recevoir d'un autre noeud des notifications comprenant une information relative à la configuration de la protection par cet autre noeud et une information relative à l'activation de la protection.

Un noeud du réseau de communication jouant le rôle de noeud racine primaire, appartenant à un arbre primaire point à multipoint protégé par un arbre de secours se raccordant à l'arbre primaire, en cas de panne l'affectant, apte à rétablir l'arbre primaire suite à la fin de la panne, est remarquable en ce que :
- le module 308 de réception est en outre agencé pour recevoir d'un autre noeud des notifications comprenant une information relative à la configuration de la protection par cet autre noeud et une information relative à l'activation de la protection ;
- le module 306 d'envoi est en outre agencé pour envoyer à un autre noeud une demande de rétablissement relative à l'arbre primaire, suite à une détection de fin de panne détectée par le module 310 de détection de panne.

Les modules 306, 308, 312, 314 du noeud protecteur sont agencés pour mettre en oeuvre le procédé de protection précédemment décrit. Il s'agit de préférence de modules logiciels comprenant des instructions logicielles pour faire exécuter les étapes du procédé de protection précédemment décrit, mises en oeuvre par un noeud du réseau de communication. L'invention concerne donc aussi :
- un programme pour noeud d'un réseau de communication, comprenant des instructions de programme destinées à commander l'exécution de celles des étapes du procédé de protection précédemment décrit qui sont exécutées par ledit noeud, lorsque ledit programme est exécuté par celui-ci ;
- un support d'enregistrement lisible par un noeud d'un réseau de communication sur lequel est enregistré le programme pour noeud d'un réseau de communication.

Les modules 306, 308 du noeud racine primaire sont agencés pour mettre en oeuvre le procédé de rétablissement précédemment décrit. Il s'agit de préférence de modules logiciels comprenant des instructions logicielles pour faire exécuter les étapes du procédé de rétablissement précédemment décrit, mises en oeuvre par un noeud du réseau de communication. L'invention concerne donc aussi :
- un programme pour noeud d'un réseau de communication, comprenant des instructions de programme destinées à commander l'exécution de celles des étapes du procédé de rétablissement précédemment décrit qui sont exécutées par ledit noeud, lorsque ledit programme est exécuté par celui-ci ;
- un support d'enregistrement lisible par un noeud d'un réseau de communication sur lequel est enregistré le programme pour noeud d'un réseau de communication.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système de communication dans un réseau de communication en mode connecté comprenant :
- au moins un noeud racine primaire PR, ledit noeud étant la racine d'un arbre primaire point à multipoint établi vers des noeuds feuilles ;
- au moins un noeud protecteur MP1 contribuant à protéger l'arbre primaire, en cas de panne affectant le noeud racine primaire, par un arbre de secours entre un noeud racine de secours et le noeud protecteur, le noeud protecteur appartenant à une branche de l'arbre primaire issue du noeud racine primaire, tel que précédemment décrit.
- un noeud racine R2 de secours tel que décrit précédemment.

Dans un mode de réalisation, le noeud racine primaire du système de communication décrit précédemment est un noeud racine primaire apte à rétablir l'arbre primaire suite à la fin de la panne, tel que décrit ci-dessus.

On notera que la description a été faite dans le cas particulier d'un réseau de communication MPLS, supportant le protocole RSVP-TE. Toutefois, ce procédé peut être mis en oeuvre dans d'autres types de réseaux de communication, dès lors qu'il est possible d'établir dans ce réseau des connexions avec réservation de ressources. Il s'agit de réseaux de transport de paquets en mode connecté. A titre d'exemple, un réseau de communication ATM, pour "Asynchronous Transfer Mode", supportant le protocole PNNI-ATM, pour " Asynchronous Transfer Mode Signaling Private Network-to-Network Interface", permet d'établir de telles connexions. Ainsi, un message de demande d'établissement d'un arbre point à multipoint avec réservation de ressources correspond à un message "Setup" et un message de confirmation d'établissement correspond à un message "Connect" par exemple.

## Revendications

1. Procédé de protection dans un réseau de communication en mode connecté d'un arbre primaire (LSP1) point à multipoint établi d'un noeud racine primaire (PR) vers des noeuds feuilles (L1,L2), en cas de panne affectant le noeud racine primaire, par un arbre de secours (LSP2) entre un noeud (R2) racine de secours et au moins un noeud de raccordement (MP1,MP2), ledit au moins un noeud de raccordement appartenant à une branche de l'arbre primaire issue du noeud racine primaire, ledit procédé comprenant les étapes suivantes, mises en oeuvre par ledit au moins un noeud de raccordement :
- une étape (E1) de réception d'une demande d'établissement (100) de l'arbre de secours envoyée par le noeud racine de secours,
- une étape (E2) de configuration d'une règle d'acheminement dans une table, ladite règle visant à acheminer des paquets en provenance de l'arbre de secours vers des branches de l'arbre primaire issues dudit noeud de raccordement,
**caractérisé en ce que** la demande d'établissement comprend un identifiant (106) du noeud racine primaire protégé et **en ce que** ladite règle d'acheminement est prévue pour être activée uniquement en cas de panne affectant le noeud racine primaire identifié.

2. Procédé de protection selon la revendication 1, dans lequel la demande d'établissement comprend un identifiant (108) de l'arbre primaire protégé différent d'un identifiant de l'arbre de secours.

3. Procédé de protection selon la revendication 1, comprenant en outre une étape (E4) d'envoi au noeud racine primaire d'une notification (200) indiquant qu'une protection de l'arbre primaire en cas de panne affectant le noeud racine primaire est configurée (204).

4. Procédé de protection selon la revendication 1, comprenant en outre :
- une étape (E5) de détection d'une panne affectant le noeud racine primaire ;
- une étape (E6) d'activation de ladite règle d'acheminement.

5. Procédé de protection selon la revendication 4, comprenant en outre une étape (E6) de notification au noeud racine de secours de l'activation de la protection (206).

6. Procédé de protection selon la revendication 4, comprenant en outre une étape (E6) de maintien de l'arbre primaire établi pour chaque branche de l'arbre primaire issue du noeud de raccordement.

7. Procédé de protection selon la revendication 4, comprenant en outre :
- une étape (E8) de réception en provenance du noeud racine primaire d'une demande de rétablissement relative à l'arbre primaire ;
- une étape (E10) d'activation d'une autre règle d'acheminement, ladite autre règle visant à acheminer des paquets reçus sur l'arbre primaire vers les branches de l'arbre primaire issues dudit noeud de raccordement.

8. Procédé de protection selon la revendication 7, dans lequel préalablement à l'étape (E8) de réception d'une demande de rétablissement de l'arbre primaire, le procédé comprend en outre :
- une étape (E7) de détection de la fin de panne ;
- une étape d'envoi au noeud racine primaire d'informations relatives à l'arbre primaire.

9. Procédé de rétablissement dans un réseau de communication en mode connecté d'un arbre primaire point à multipoint établi d'un noeud racine primaire vers des noeuds feuilles, **caractérisé en ce qu'**il comprend les étapes suivantes mises en oeuvre par ledit noeud racine primaire :
- une étape (G1) de réception en provenance d'un des noeuds de raccordement situés en aval d'une notification indiquant qu'une protection de l'arbre primaire est prévue, en cas de panne affectant le noeud racine primaire, par un arbre de secours se raccordant à l'arbre primaire audit noeud de raccordement ;
- une étape de détection d'une fin d'une panne l'affectant ;
- une étape (G3) d'envoi audit noeud de raccordement d'une demande de rétablissement relative à l'arbre primaire.

10. Noeud protecteur (MP1, MP2, 300) dans un réseau de communication en mode connecté, ledit noeud protecteur contribuant à protéger un arbre primaire (LSP1) point à multipoint établi d'un noeud racine primaire vers des noeuds feuilles (L1, L2), en cas de panne affectant le noeud racine primaire, par un arbre de secours entre un noeud racine de secours (R2) et au moins ledit noeud protecteur, ledit noeud protecteur appartenant à une branche de l'arbre primaire issue du noeud racine primaire et comprenant :
- des moyens (308) de réception d'une demande d'établissement de l'arbre de secours envoyée par le noeud racine de secours comprenant un identifiant du noeud racine primaire protégé ;
- des moyens (312) de configuration d'une règle d'acheminement dans une table, ladite règle visant à acheminer des paquets en provenance de l'arbre de secours vers des branches de l'arbre primaire issues dudit noeud protecteur uniquement en cas de panne affectant le noeud racine primaire.

11. Noeud racine (PR, 300) dans un réseau de communication en mode connecté, ledit noeud étant la racine d'un arbre primaire point à multipoint établi vers des noeuds feuilles, apte à rétablir l'arbre primaire suite à la fin d'une panne l'affectant, ledit noeud comprenant :
- des moyens (308) de réception en provenance d'un des noeuds de raccordement situés en aval d'une notification indiquant qu'une protection de l'arbre primaire est prévue en cas de panne affectant le noeud racine par un arbre de secours se raccordant à l'arbre primaire audit noeud de raccordement ;
- des moyens (310) de détection d'une fin d'une panne l'affectant ;
- des moyens (306) d'envoi audit noeud de raccordement d'une demande de rétablissement relative à l'arbre primaire.

12. Système de communication dans un réseau de communication en mode connecté comprenant :
- au moins un noeud racine (PR), ledit noeud étant la racine d'un arbre primaire point à multipoint établi vers des noeuds feuilles ;
- au moins un noeud protecteur (MP1, MP2) selon la revendication 10 ;
- un noeud racine (R2) de secours comprenant des moyens (306) d'envoi, agencés pour envoyer une demande d'établissement de l'arbre de secours à un noeud protecteur, la demande d'établissement comprenant un identifiant du noeud racine primaire protégé, et des moyens (308) de réception, agencés pour recevoir d'un noeud protecteur une notification comprenant une information relative à la configuration de la protection par cet autre noeud.

13. Signal émis par un noeud d'un réseau de communication en mode connecté à destination d'un autre noeud du réseau et véhiculant une demande (100) d'établissement d'une branche entre ledit noeud et ledit autre noeud, ladite branche appartenant à un arbre de secours, ladite demande d'établissement comprenant :
- une demande de protection d'un arbre primaire point à multipoint, établi d'un noeud racine primaire vers des noeuds feuilles, en cas de panne affectant le noeud racine primaire, par ledit arbre de secours, ledit autre noeud appartenant à une branche de l'arbre primaire issue du noeud racine primaire ;
- un identifiant (106) du noeud racine primaire.

14. Signal émis par un noeud d'un réseau de communication en mode connecté à destination d'un autre noeud du réseau et véhiculant un message (200) appartenant au groupe comprenant au moins une réponse à une demande d'établissement d'un arbre de secours entre ledit noeud et ledit autre noeud afin de protéger un arbre primaire point à multipoint, établi d'un noeud racine primaire vers des noeuds feuilles, en cas de panne affectant le noeud racine primaire, par ledit arbre de secours, et un message de maintien de l'arbre primaire établi, ledit noeud appartenant à une branche de l'arbre primaire issue du noeud racine primaire, ledit message comprenant une information appartenant au groupe comprenant une information (204) relative à la configuration de la protection et une information (206) relative à l'activation de la protection.

15. Programme d'ordinateur comportant des instructions pour la mise en oeuvre du procédé de protection selon la revendication 1 par un noeud d'un réseau de communication en mode connecté, lorsque ce programme est exécuté par un processeur.

## Claims

1. Method of protection in a communication network in connected mode of a point-to-multipoint primary tree (LSP1) set up from a primary root node (PR) to leaf nodes (L1, L2), in the case of a fault affecting the primary root node, by a backup tree (LSP2) between a backup root node (R2) and at least one linking node (MP1,MP2), said at least one linking node belonging to a branch of the primary tree that arises from the primary root node, said method comprising the following steps, implemented by said at least one linking node:
- a step (E1) of receiving a setup request (100) to establish the backup tree, dispatched by the backup root node,
- a step (E2) of configuring a routing rule in a table, said rule being aimed at routing packets originating from the backup tree to branches of the primary tree that arise from said linking node, **characterized in that** the setup request comprises an identifier (106) of the protected primary root node and **in that** said routing rule is designed to be activated solely in the case of a fault affecting the identified primary root node.

2. Method of protection according to Claim 1, in which the setup request comprises an identifier (108) of the protected primary tree different from an identifier of the backup tree.

3. Method of protection according to Claim 1, furthermore comprising a step (E4) of dispatching to the primary root node a notification (200) indicating that a protection of the primary tree in the case of a fault affecting the root node is configured (204).

4. Method of protection according to Claim 1, furthermore comprising:
- a step (E5) of detecting a fault affecting the primary root node;
- a step (E6) of activating said routing rule.

5. Method of protection according to Claim 4, furthermore comprising a step (E6) of notifying the backup root node of the activation of the protection (206).

6. Method of protection according to Claim 4, furthermore comprising a step (E6) of maintaining the set up primary tree for each branch of the primary tree arising from the linking node.

7. Method of protection according to Claim 4, furthermore comprising:
- a step (E8) of receiving from the primary root node a restore request relating to the primary tree;
- a step (E10) of activating another routing rule, said other rule being aimed at routing packets received on the primary tree to the branches of the primary tree that arise from said linking node.

8. Method of protection according to Claim 7, in which prior to the step (E8) of receiving a restore request for the primary tree, the method furthermore comprises:
- a step (E7) of detecting the end of the fault;
- a step of dispatching information relating to the primary tree to the primary root node.

9. Method of restore in a communication network in connected mode of a point-to-multipoint primary tree set up from a primary root node to leaf nodes, **characterized in that** it comprises the following steps implemented by said primary root node:
- a step (G1) of receiving from one of the linking nodes situated downstream a notification indicating that a protection of the primary tree is scheduled, in the case of a fault affecting the primary root node, by a backup tree connected to the primary tree at said linking node;
- a step of detecting an end of a fault affecting it;
- a step (G3) of dispatching a restore request relating to the primary tree to said linking node.

10. Protector node (MP1, MP2, 300) in a communication network in connected mode, said protector node contributing to protect a point-to-multipoint primary tree (LSP1) set up from a primary root node to leaf nodes (L1, L2), in the case of a fault affecting the primary root node, by a backup tree between a backup root node (R2) and at least said protector node, said protector node belonging to a branch of the primary tree that arises from the primary root node and comprising:
- means (308) for receiving a setup request for the backup tree, dispatched by the backup root node comprising an identifier of the protected primary root node;
- means (312) for configuring a routing rule in a table, said rule being aimed at routing packets originating from the backup tree to branches of the primary tree that arise from said protector node solely in the case of a fault affecting the primary root node.

11. Root node (PR, 300) in a communication network in connected mode, said node being the root of a point-to-multipoint primary tree set up to leaf nodes, which is able to restore the primary tree subsequent to the end of a fault affecting it, said node comprising:
- means (308) for receiving from one of the linking nodes situated downstream a notification indicating that a protection of the primary tree is scheduled in the case of a fault affecting the root node by a backup tree linking to the primary tree to said linking node;
- means (310) for detecting an end of a fault affecting it;
- means (306) for dispatching a restore request relating to the primary tree to said linking node.

12. Communication system in a communication network in connected mode comprising:
- at least one root node (PR), said node being the root of a point-to-multipoint primary tree set up to leaf nodes;
- at least one protector node (MP1, MP2) according to Claim 10;
- a backup root node (R2) comprising dispatching means (306), designed to dispatch a setup request for the backup tree to a protector node, the setup request comprising an identifier of the protected primary root node, and reception means (308), designed to receive from a protector node a notification comprising an item of information relating to the configuration of the protection by this other node.

13. Signal sent by a node of a communication network in connected mode destined for another node of the network and conveying a setup request (100) for a branch between said node and said other node, said branch belonging to a backup tree, said setup request comprising:
- a request for protecting a point-to-multipoint primary tree, set up from a primary root node to leaf nodes, in the case of a fault affecting the primary root node, by said backup tree, said other node belonging to a branch of the primary tree that arises from the primary root node;
- an identifier (106) of the primary root node.

14. Signal sent by a node of a communication network in connected mode destined for another node of the network and conveying a message (200) belonging to the group comprising at least one response to a setup request to establish a backup tree between said node and said other node so as to protect a point-to-multipoint primary tree, set up from a primary root node to leaf nodes, in the case of a fault affecting the primary root node, by said backup tree, and a message of maintaining the primary tree set up, said node belonging to a branch of the primary tree that arises from the primary root node, said message comprising an item of information belonging to the group comprising an item of information (204) relating to the configuration of the protection and an item of information (206) relating to the activation of the protection.

15. Computer program comprising instructions for the implementation of the protection method according to Claim 1 by a node of a communication network in connected mode, when this program is executed by a processor.

## Patentansprüche

1. Verfahren zum Schutz, in einem Kommunikationsnetzwerk im Online-Betrieb, eines von einem Primärwurzelknoten (PR) zu Blattknoten (L1, L2) aufgebauten Punkt-zu-Mehrpunkt-Primärbaums (LSP1) im Fall einer den Primärwurzelknoten betreffenden Störung durch einen Hilfsbaum (LSP2) zwischen einem Hilfswurzelknoten (R2) und mindestens einem Anschlussknoten (MP1, MP2), wobei der mindestens eine Anschlussknoten zu einem vom Primärwurzelknoten stammenden Zweig des Primärbaums gehört, wobei das Verfahren die folgenden Schritte enthält, die von dem mindestens einen Anschlussknoten durchgeführt werden:
- einen Schritt (E1) des Empfangs einer vom Hilfswurzelknoten gesendeten Aufbauanforderung (100) des Hilfsbaums,
- einen Schritt (E2) der Konfiguration einer Routing-Regel in einer Tabelle, wobei die Regel darauf abzielt, vom Hilfsbaum kommende Pakete zu vom Anschlussknoten stammenden Zweigen des Primärbaums zu routen,
**dadurch gekennzeichnet, dass** die Aufbauanforderung eine Kennung (106) des geschützten Primärwurzelknotens enthält, und dass die Routing-Regel vorgesehen ist, um nur im Fall einer den gekennzeichneten Primärwurzelknoten betreffenden Störung aktiviert zu werden.

2. Schutzverfahren nach Anspruch 1, bei dem die Aufbauanforderung eine Kennung (108) des geschützten Primärbaums enthält, die sich von einer Kennung des Hilfsbaums unterscheidet.

3. Schutzverfahren nach Anspruch 1, das weiter einen Schritt (E4) des Sendens einer Benachrichtigung (200) an den Primärwurzelknoten enthält, die angibt, dass ein Schutz des Primärbaums im Fall einer den Wurzelknoten betreffendes Störung konfiguriert ist (204).

4. Schutzverfahren nach Anspruch 1, das weiter enthält:
- einen Schritt (E5) der Erfassung einer den Primärwurzelknoten betreffenden Störung;
- einen Schritt (E6) der Aktivierung der Routing-Regel.

5. Schutzverfahren nach Anspruch 4, das weiter einen Schritt (E6) der Benachrichtigung des Hilfswurzelknotens über die Aktivierung des Schutzes (206) enthält.

6. Schutzverfahren nach Anspruch 4, das weiter einen Schritt (E6) der Aufrechterhaltung des für jeden vom Anschlussknoten stammenden Zweig des Primärbaums aufgebauten Primärbaums enthält.

7. Schutzverfahren nach Anspruch 4, das weiter enthält:
- einen Schritt (E8) des Empfangs einer Wiederherstellungsanforderung bezüglich des Primärbaums vom Primärwurzelknoten;
- einen Schritt (E10) der Aktivierung einer weiteren Routing-Regel, wobei die weitere Regel darauf abzielt, im Primärbaum empfangene Pakete zu den vom Anschlussknoten stammenden Zweigen des Primärbaums zu routen.

8. Schutzverfahren nach Anspruch 7, bei dem das Verfahren vor dem Schritt (E8) des Empfangs einer Wiederherstellungsanforderung des Primärbaums weiter enthält:
- einen Schritt (E7) der Erfassung des Endes der Störung;
- einen Schritt des Sendens von Informationen bezüglich des Primärbaums an den Primärwurzelknoten.

9. Verfahren zur Wiederherstellung, in einem Kommunikationsnetzwerk im Online-Betrieb, eines von einem Primärwurzelknoten zu Blattknoten aufgebauten Punkt-zu-Mehrpunkt-Primärbaums, **dadurch gekennzeichnet, dass** es die folgenden Schritte enthält, die vom Primärwurzelknoten durchgeführt werden:
- einen Schritt (G1) des Empfangs einer Benachrichtigung von einem der hinten befindlichen Anschlussknoten, die angibt, dass im Fall einer den Primärwurzelknoten betreffenden Störung ein Schutz des Primärbaums durch einen Hilfsbaum vorgesehen ist, der sich an den Primärbaum am Anschlussknoten anschließt;
- einen Schritt der Erfassung eines Endes einer ihn betreffenden Störung;
- einen Schritt (G3) des Sendens einer Wiederherstellungsanforderung bezüglich des Primärbaums an den Anschlussknoten.

10. Schutzknoten (MP1, MP2, 300) in einem Kommunikationsnetzwerk im Online-Betrieb, wobei der Schutzknoten dazu beiträgt, einen von einem Primärwurzelknoten zu Blattknoten (L1, L2) aufgebauten Punkt-zu-Mehrpunkt-Primärbaum (LSP1) im Fall einer den Primärwurzelknoten betreffenden Störung durch einen Hilfsbaum zwischen einem Hilfswurzelknoten (R2) und mindestens dem Schutzknoten zu schützen, wobei der Schutzknoten zu einem vom Primärwurzelknoten stammenden Zweig des Primärbaums gehört und enthält:
- Einrichtungen (308) zum Empfang einer vom Hilfswurzelknoten gesendeten Aufbauanforderung des Hilfsbaums, die eine Kennung des geschützten Primärwurzelknotens enthält;
- Einrichtungen (312) zur Konfiguration einer Routing-Regel in einer Tabelle, wobei die Regel darauf abzielt, vom Hilfsbaum kommende Pakete nur im Fall einer den Primärwurzelknoten betreffenden Störung zu vom Schutzknoten stammenden Zweigen des Primärbaums zu routen.

11. Wurzelknoten (PR, 300) in einem Kommunikationsnetzwerk im Online-Betrieb, wobei der Knoten die Wurzel eines zu Blattknoten aufgebauten Punkt-zu-Mehrpunkt-Primärbaums ist, der den Primärbaum nach dem Ende einer ihn betreffenden Störung wiederherstellen kann, wobei der Knoten enthält:
- Einrichtungen (308) zum Empfang einer von einem der hinten befindlichen Anschlussknoten kommenden Benachrichtigung, die angibt, dass im Fall einer den Wurzelknoten betreffenden Störung ein Schutz des Primärbaums durch einen Hilfsbaum vorgesehen ist, der sich an den Primärbaum am Anschlussknoten anschließt;
- Einrichtungen (310) zur Erfassung eines Endes einer ihn betreffenden Störung;
- Einrichtungen (306) zum Senden einer Wiederherstellungsanforderung bezüglich des Primärbaums an den Anschlussknoten.

12. Kommunikationssystem in einem Kommunikationsnetzwerk im Online-Betrieb, das enthält:
- mindestens einen Wurzelknoten (PR), wobei der Knoten die Wurzel eines zu Blattknoten aufgebauten Punkt-zu-Mehrpunkt-Primärbaums ist;
- mindestens einen Schutzknoten (MP1, MP2) nach Anspruch 10;
- einen Hilfswurzelknoten (R2), der Sendeeinrichtungen (306), die eingerichtet sind, um eine Aufbauanforderung des Hilfsbaums an einen Schutzknoten zu senden, wobei die Aufbauanforderung eine Kennung des geschützten Primärwurzelknotens enthält, und Empfangseinrichtungen (308) enthält, die eingerichtet sind, um von einem Schutzknoten eine Benachrichtigung zu empfanden, die eine Information bezüglich der Konfiguration des Schutzes durch diesen anderen Knoten enthält.

13. Signal, das von einem Knoten eines Kommunikationsnetzwerks im Online-Betrieb an einen anderen Knoten des Netzwerks gesendet wird und eine Anforderung (100) zum Aufbau eines Zweigs zwischen dem Knoten und dem anderen Knoten übermittelt, wobei der Zweig zu einem Hilfsbaum gehört, wobei die Aufbauanforderung enthält:
- eine Anforderung zum Schutz eines von einem Primärwurzelknoten zu Blattknoten aufgebauten Punkt-zu-Mehrpunkt-Primärbaums im Fall einer den Primärwurzelknoten betreffenden Störung durch den Hilfsbaum, wobei der andere Knoten zu einem vom Primärwurzelknoten stammenden Zweig des Primärbaums gehört;
- eine Kennung (106) des Primärwurzelknotens.

14. Signal, das von einem Knoten eines Kommunikationsnetzwerks im Online-Betrieb an einen anderen Knoten des Netzwerks gesendet wird und eine Mitteilung (200), die zu der Gruppe gehört, die mindestens eine Antwort auf eine Aufbauanforderung eines Hilfsbaums zwischen dem Knoten und dem anderen Knoten enthält, um einen von einem Primärwurzelknoten zu Blattknoten aufgebauten Punkt-zu-Mehrpunkt-Primärbaum im Fall einer den Primärwurzelknoten betreffenden Störung durch den Hilfsbaum zu schützen, und eine Mitteilung über die Aufrechterhaltung des aufgebauten Primärbaums übermittelt, wobei der Knoten zu einem vom Primärwurzelknoten stammenden Zweig des Primärbaums gehört,
wobei die Mitteilung eine Information enthält, die zu der Gruppe gehört, die eine Information (204) bezüglich der Konfiguration des Schutzes und eine Information (206) bezüglich der Aktivierung des Schutzes enthält.

15. Computerprogramm, das Anweisungen zur Durchführung des Schutzverfahrens nach Anspruch 1 durch einen Knoten eines Kommunikationsnetzwerks im Online-Betrieb aufweist, wenn dieses Programm von einem Prozessor ausgeführt wird.
